(19) **Europäisches Patentamt**
**European Patent Office**
**Office européen des brevets**

(11) **EP 2 743 142 B1**

(12) **EUROPEAN PATENT SPECIFICATION**

(45) Date of publication and mention
of the grant of the patent:
**25.03.2020 Bulletin 2020/13**

(51) Int Cl.:
***B60R 21/015*** (2006.01)

(21) Application number: **12196734.3**

(22) Date of filing: **12.12.2012**

(54) **Method for retracting a seat belt**

Verfahren zum Einziehen eines Sitzgurtes

Procédé de rappel d'une ceinture de sécurité

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.06.2014 Bulletin 2014/25**

(73) Proprietor: **Volvo Car Corporation
40 531 Göteborg (SE)**

(72) Inventor: **Hardå, Peter
42349 Torslanda (SE)**

(74) Representative: **Valea AB
Box 1098
405 23 Göteborg (SE)**

(56) References cited:
**DE-A1- 10 346 625        DE-A1- 19 946 072
DE-A1-102006 021 380     GB-A- 2 236 419
US-A- 5 004 178**

## Description

TECHNICAL FIELD

The present disclosure relates to a method for retracting a seat belt of a vehicle. The disclosure further relates to a safety arrangement of a vehicle.

BACKGROUND

A modern vehicle, such as a car, is provided with safety arrangements in order to prevent or avoid injury to the seat occupant of the vehicle in case of an accident. It is well-known to use a safety arrangement comprising a seat belt for restraining the movement of the seat occupant in case of a sudden change of speed of the vehicle. Yet, a modern seat belt permits movement of the seat occupant during normal driving conditions or when the vehicle stands still, e.g. the seat occupant leaning forward, by adjusting the used length of the seat belt according to the movement of the seat occupant. It is further known to use a retractor to suddenly and strongly retract the seat belt in case of a collision or imminent collision being detected, since it is beneficial for the seat occupant to be located close to a backrest and a headrest In such a situation. The sudden and strong retraction of the seat belt is certainly uncomfortable for the seat occupant, and may even cause a minor injury to the seat occupant. However, the advantages of being seated close to the backrest and headrest in case of a collision outweigh any discomfort or minor injury.

Document US 2007/0114766 A1 discloses a safety arrangement for detecting the position of an occupant of a seat, which is provided with a seat belt mounted on a retractor and includes a sensor, which measures the length of belt withdrawn from the retractor. The sensor is associated with a processor unit which is associated with a seat position sensor. By determining the position of the seat and by determining the minimum length of belt paid-out from the retractor after the seat belt has been buckled in position, and by determining how additional belt has been paid-out at any incident, the position of the seat occupant relative to an airbag can be determined. If the seat occupant is very close to the airbag, the nature of deployment of the air-bag can be moderated by the processor unit. The invention disclosed in US 2007/0114768 A1 is thus based on the idea of detecting the position of the seat occupant from the amount of belt withdrawn relative to a reference, if the position of the seat is known. This information is used to moderate or inhibit deployment of the airbag, if the seat occupant is very close to the airbag

Document US 2007/0114768 A1 thus tells how to operate the airbag as a consequence of the position of the seat occupant relative to the vehicle. The document is however silent about how to control the retraction of the seat belt, in case of a collision and/or a risk situation being detected.

Document DE 10346625 A1 relates to a device for ascertaining an occupant position in a vehicle by measuring the extension of a seat belt, the device conducting the measurement as a function of time.

Document DE 10 2006 021380 A1 relates to vehicle occupant safety system having at least one restraint device having at least one adjustable parameter, a vehicle seat having at least one seat sensor detecting the sitting position of a vehicle occupant, a seatbelt system having at least one belt extension sensor detecting the belt extension length, and a control unit determining from the values from the seat sensor and from the belt extension sensor whether a vehicle occupant is in a forward-leaning position. The control unit then specifies the value of the adjustable parameter of the restraint device as a function of a forward-leaning position of the vehicle occupant.

SUMMARY

The object of the present disclosure is to overcome or ameliorate at least one of the disadvantages of the prior art, or to provide a useful alternative.

It is desirable to provide a method for retracting a seat belt, wherein the retraction of the seat belt is controlled by applying a retraction force, in case of a risk situation being detected.

It is further desirable to provide a method not causing unnecessary discomfort to a seat occupant using the seat belt.

The object above may be achieved by the subject-matter of claim 1.

Thus, in a first aspect of the present invention there is provided a method according to claim 1 for retracting a seat belt of a vehicle, the method comprising the steps of

- determining an excessive length $L_\Delta$ of seat belt pulled out, the excessive length $L_\Delta$ of seat belt pulled out being the difference between the current length $L$ and the minimum length $L_{min}$ of seat belt pulled out, when the seat belt Is in use,
- in case of detecting a risk situation involving the vehicle, retracting the seat belt by applying a retraction force $F$, the retraction force $F$ being a function of the excessive length $L_\Delta$ of seat belt pulled out.

The retraction force is used to pull the seat belt back in case of a risk situation being detected, i.e. a situation of danger or potential danger. The risk situation may be that a collision is imminent or that a driver of the vehicle has lost control of the vehicle. It is then desirable to move a seat occupant back to the favourable position against the backrest, in case the seat occupant e.g. is leaning forwards.

The retraction force $F$ is differentiated from a pre-tension force used to keep the seat belt tensioned, when the seat occupant moves in the seat during normal driving conditions. The retraction force used is a number of times higher than the pre-tension force, at least twice, preferably at least three times and most preferably at least five times.

The minimum length $L_{min}$ of seat belt pulled out relates to when the seat belt is in use by the current seat occupant.

An aim of the present invention is to apply a sufficiently high retraction force, which yet does not cause any unnecessary discomfort to the seat occupant. Purely as an example: If the excessive length $L_\Delta$ is small, the seat occupant is sitting close to the backrest and the seat belt can be retracted in a gentle manner. However, if the excessive length $L_\Delta$ is large, the seat occupant is sitting far from the backrest and the seat belt is preferably retracted with a high retraction force to quickly move the seat occupant back to a more favourable position. For the second case, the discomfort caused by the high retraction force is acceptable, since it is important from a safety point of view to position the seat occupant more favourably. On the other side, in the first case, it would be undesirable to apply such a high retraction force. According to the invention, it is hence disclosed that the retraction force is a function of the excessive length $L_\Delta$ of seat belt pulled out.

It is further to be noted, that there is no need for the method to include a step of determining the position of the seat relative to the rest of the vehicle. Instead, the method will work irrespective of the position of the seat, since the retraction force is a function of the excessive length $L_\Delta$ of seat belt. Purely as an example, if the seat is in a forward position the absolute length of the used seat belt will be higher than for a more rearward position. However, since the excessive length $L_\Delta$, is determined as a difference, its value will not be influenced by the position of the seat.

The excessive length is determined by measuring, directly or indirectly, a current length $L$ of seat belt pulled out and comparing it to a minimum length $L_{min}$ of seat belt pulled out..

The method includes the steps of:

- determining the current length $L$ of seat belt pulled out,
- determining the minimum length $L_{min}$ of seat belt pulled out,
- calculating the excessive length $L_\Delta$ of seat belt pulled out as the difference between the current length $L$ and the minimum length $L_{min}$ of seat belt pulled out.

Since the excessive length $L_\Delta$ of seat belt pulled out is determined as a difference, there is no need to measure the absolute lengths for the current length $L$ and the minimum length $L_{min}$, as long as the determined lengths relate to each other such that a difference may be calculated.

There are a couple of different lengths of the seat belt, which are used herein:

$L_{unused}$    length of unused seat belt, when hanging at the vehicle wall,

$L_{empty}$    length of seat belt when connected but seat empty,

$L_{min}$    minimum length of seat belt when in use,

$L$    current length of seat belt when in use,

$L_\Delta$    excessive length of seat belt when in use,

$L_{max}$    maximum value, physical length of seat belt.

Further the following relationships are valid:

$$L_{unused} < L_{empty}$$

$$L_{empty} < L_{min}$$

$$L_{min} <= L$$
$$\wedge$$

$$L <= L_{max}$$

$$L_\Delta = L - L_{min}$$

When the seat belt is not used, it hangs against the wall of the vehicle. It has then an unused length, $L_{unused}$. The length of the seat belt when connected but the seat is empty, $L_{empty}$, represents a lower limit for the minimum value $L_{min}$. The length of the seat belt when connected but the seat is empty, $L_{empty}$, will depend on the position of the seat in relation to the vehicle body. However the lowest value is obtained assuming that the seat is in a rearmost position. Even the thinnest person will add to the length, even when leaning fully back, such that the minimum length $L_{min}$ of seat belt pulled out always is larger than $L_{empty}$, as soon as the seat is used and the seat occupant utilizes the seat belt.

The current length $L$ for a particular seat occupant of the seat belt may vary between $L_{min}$ and $L_{max}$. The lowest value, the minimum value $L_{min}$, is obtained when the seat occupant leans against the backrest. The current length $L$ increases, when the seat occupant leans forwards and decreases when the seat occupant leans backwards. A large and/or thick seat occupant will have longer lengths as regards minimum length $L_{min}$ and current length $L$ than a small or thin seat occupant. The lengths are also influenced by the clothes worn by the seat occupant. Purely as an example a thick winter jacket will add more to the length than a T-shirt. The maximum length $L_{max}$ depends on the physical length of the seat belt and tells how far the seat belt can maximally be pulled out.

The lengths relate to the amount of seat belt being pulled out from e.g. a storage magazine for the seat belt. The portion of the seat belt not being in use may e.g. be stored as wound up on a spool in a retractor.

The current length L of seat belt pulled out may be determined continuously or repeatedly. Thereby, there is always a representative value available. The current length L may for example be determined at least every second, preferably at least every 1/10 of a second and most preferably every 1/100 of a second.

Also the minimum length $L_{min}$ may be determined continuously or repeatedly. This may be advantageous, since it difficult to know for the individual seat occupant how long time it will take before the seat occupant leans backwards against the backrest. Further, also when the seat occupant leans against the backrest, the seat belt may move a little over the body of the seat occupant, and as air may be pressed out of the clothes. The used length of the seat belt thereby slowly decreases and new values of the minimum length $L_{min}$ may successively be provided.

The minimum length may be determined by determining the current length L a plurality of times, and determining the minimum length $L_{min}$ of seat belt pulled out as a minimum value of the determined plurality of current lengths L of seat belt pulled out. In that case, also the minimum length $L_{min}$ may have a varying value, e.g. being determined as the lowest value so far, e.g. since the particular seat occupant buckled up in the seat.

in order to avoid false detections, it may be required that at least a number measured lengths, e.g. at least two, or at least two consecutive values, are below the currently determined minimum length $L_{min}$, before the minimum length $L_{min}$ is set to a new value.

As a complement, the minimum length $L_{min}$ may be determined by recalling it from a data storage memory, e.g. when recalling data about seat settings for a particular seat occupant. In that case, the recalled minimum length $L_{min}$ would not reflect the actual clothes being worn by the seat occupant, but would form a good approximation. Such a recalled value may form a starting point for determining the minimum length $L_{min}$ from current length L values, since it is expected that the seat occupant, even if wearing thicker clothes will have an actual minimum length $L_{min}$ being within the stored minimum length $L_{min}$ plus compensation for the thicker clothes.

In order to obtain a representative value of the minimum length $L_{min}$ it is assumed that the seat occupant, at least once, leans against the backrest. It is highly improbable that the seat occupant would not, at least once, lean against the backrest. However, if the seat occupant has not yet leaned against the backrest, the determined value of the minimum length $L_{min}$ will be the best approximation so far, an approximation which will be better, the closer the seat occupant has been to the backrest. In that case, the method will still be useful, even though it is preferred that the seat occupant, at least once, has leaned against the backrest.

The method may comprise to retract at least the excessive length $L_{\Delta}$ of seat belt pulled out. Since the retraction force is higher than the normal pre-tension force, more seat belt than the excessive length $L_{\Delta}$ may be retracted, especially if the seat occupant wears fluffy clothes. In that case, the seat belt may be pulled back as far as the retraction force permits. The seat occupant may in such a case be pressed against the backrest by the seat belt.

Further, even if there is too little time to retract the full excessive length La, it is still useful to retract as much as possible of the excessive length $L_{\Delta}$ in order to move the seat occupant as close as possible to the backrest.

The retraction force F is, at least partly, increasing as a function of the excessive length $L_{\Delta}$ of seat belt pulled out. This means that a higher force will be used if the seat occupant is far from the backrest, as compared to if the seat occupant is close to the backrest. The function may be, at least partly, continuously increasing. Alternatively, the function may be stepwise increasing. The whole function, from $L_{\Delta} = 0$ to $L_{\Delta} = L_{max} - L_{min}$, may be increasing, or only part of it.

As an option, a minimal retraction force $F_{min}$ may be utilized if the excessive length $L_{\Delta}$ of seat belt pulled out is smaller than or equal to a first limit value $L_A$.

As an option, a maximal retraction force $F_{max}$ may be utilized, if the excessive length $L_{\Delta}$ of seat belt pulled out is greater than a second limit value $L_B$. The maximal retraction force $F_{max}$ may be used to retract as much seat belt as possible with that magnitude of force. As mentioned above, the retracted length may exceed the excessive length $L_{\Delta}$.

If using both the first and the second limit values, the second limit value $L_B$ is larger than the first limit value $L_A$.

Further, the second limit value may be set as the same as the first limit value, $L_B = L_A$. In that case, the retraction force F will comprise a step function: below and at the limit value, the minimal retraction force $F_{min}$ will be applied, and above the limit value the maximal retraction force $F_{max}$ will be applied. In that case, at least the maximal retraction force $F_{max}$ will be higher than the normal pre-tension force.

The method may optionally further comprise

- determining if a seat occupant is present in a seat, to which the seat belt is associated, the seat belt only being retracted, if the seat occupant is present in the seat.

If there is no seat occupant present in the seat, there is no need to determine any lengths or to apply a retraction force. Sometimes, a bag or similar can be put in a seat and attached by applying the seat belt through e.g. a handle of the bag. Thereby, it can be avoided that the bag is thrown around in the vehicle in case of a sudden speed change of the vehicle. It may in such a case be favourable to anyway retract the seat belt, although the seat is occupied by an object, and not a person. The term seat occupant as used herein is thus not restricted to human beings, but may also include other objects occupying the seat.

The method further comprises

- determining if the seat belt is buckled up, and determining the minimum length $L_{min}$ of seat belt pulled out since it was determined last time that the seat belt was buckled up.

If the seat belt is not buckled up, there is no point in retracting the seat belt with the above-mentioned retraction force in case of a collision.

According to a standard configuration of the seat belt, there is a first belt portion running across the torso of the seat occupant and a second belt portion running over the hip of the seat occupant. If the seat occupant leans forwards, it is primarily the length of the first belt portion, which is increased. The above-mentioned method may therefore be performed in relation to the length of first belt portion only, or in relation to both the length of the first and second belt portions.

In a second aspect of the present invention, there is provided a safety arrangement of a vehicle according to claim 8, the safety arrangement comprising

- a seat belt,
- a first sensor, for directly or indirectly determining an excessive length $L_\Delta$ of seat belt pulled out,
- a collision detection system,
- a retractor, for retracting the seat belt by applying a retraction force F, in case risk situation involving the vehicle being detected by the collision detection system, and
- a processor, which is adapted for determining the retraction force F as a function of the excessive length $L_\Delta$ of seat belt pulled out.

The first sensor may directly or indirectly measure a parameter corresponding to the length of the seat belt being pulled out. The first sensor may e.g. directly measure the length. Alternatively, it may measure the rotation of a retractor spool being used for storing the seat belt. It may e.g. measure the angular position of the retractor spool. Such sensors are known to the skilled person from e.g. the document US 2007/0114768 A1.

As already explained above, there is no need to include a seat position detector in the safety arrangement according to the invention, since the position of the seat is not used for determining the excessive length $L_\Delta$. However, it is an option to include a seat position detector, since it may be used for other tasks, such as determining the distance between the seat occupant and an airbag in the steering wheel or dashboard.

In an embodiment, the first sensor is adapted for determining, directly or indirectly, a current length L of seat belt pulled out, and the excessive length $L_\Delta$ of seat belt pulled out is calculated as the difference between a current length L of seat belt pulled out and a minimum length $L_{min}$ of seat belt pulled out, when the seat belt is in use.

The first sensor is also used for determining, directly or indirectly, the minimum length $L_{min}$ of seat belt, e.g. by determining the current length L of seat belt a plurality of times, and determining the minimum length $L_{min}$ of seat belt pulled out as a minimum value of the determined plurality of current lengths L of seat belt pulled out. In that case, also the minimum length $L_{min}$ has a varying value, e.g. being determined as the lowest value so far, e.g. since the particular seat occupant buckled up in the seat. The calculations may be made in the processor.

The collision detection system may comprise a remote sensor system, e.g. a camera system, an IR camera system, a radar, a lidar, an ultrasonic sensor system, an accelerometer and/or a vehicle dynamics sensor, such as a steering wheel angle sensor. As an alternative, or in addition, the collision detection system may comprise a contact sensor system, e.g. a piezoelectric sensor. The retraction of the seat belt may be triggered directly by the remote sensor system detecting an imminent collision or another risk situation. The collision detection system is connected to the processor. One or more sensors may be used by the collision detection system. They may be located at various positions in the vehicle depending on type of sensor.

The retractor may be electrical, e.g. utilizing an electrical motor, and be electronically controlled by the processor, e.g. by sending an electrical signal. Alternatively, the retractor may be mechanical. Alternatively, the retractor may comprise a pyrotechnical means. However, a pyrotechnical means may only be used once. It then has to be replaced by a new pyrotechnical means. It is thus preferred to use a retractor which may be used more than once and does not have to be replaced, e.g. an electrical or mechanical retractor.

This is in particular advantageous, if the safety arrangement is activated in case of a risk situation, such as an imminent collision, since in that case the safety arrangement may be easily reset, e.g. if it was activated unnecessarily, i.e. the collision was actually avoided or was less severe than anticipated. Thereby, the threshold for activating the retractor to retract the seat belt with the above retraction force may be lowered, since there is only a little effort, and/or cost, involved to reset it. The retractor may thus be activated already when a risk for a collision is detected. If instead using a one-time retractor, such as the pyrotechnical means, the vehicle would need to go to e.g. a garage or a workshop to replace the one-time retractor, thus resulting in cost and effort.

The safety arrangement further comprises a seat belt usage sensor. The seat belt sensor usage sensor is used to see if the seat belt is buckled up.

The safety arrangement may form a part of a larger system of the vehicle, such as an anti-collision system. The safety arrangement may be associated with a driver-assist system, such that the retractor may be activated, if it is detected that the driver has lost control of the vehicle, which is an example of a risk situation, since losing control of the vehicle may lead to a collision.

In a third aspect of the invention there is provided a vehicle comprising a safety arrangement according to above.

In a fourth aspect of the invention there is provided a use of a safety arrangement for retracting the seat belt according to claim 11.

BRIEF DESCRIPTION OF THE DRAWINGS

The present invention will hereinafter be further explained by means of non-limiting embodiments with reference to the appended drawings wherein:

Fig. 1 illustrates a vehicle with a safety arrangement according to the invention,

Fig. 2 illustrates current length L of seat belt pulled out as a function of time,

Fig. 3 illustrates the retraction force F as a function of current length L of seat belt pulled out, and as a function of the excessive length $L_\Delta$ of seat belt pulled out, according to a first embodiment, and,

Fig. 4 illustrates the retraction force F as a function of the excessive length $L_\Delta$ of seat belt pulled out according to a second embodiment.

It should be noted that the appended drawings are not necessarily drawn to scale and that the dimensions of some features of the present invention may have been exaggerated for the sake of clarity.

DETAILED DESCRIPTION

The invention will, in the following, be exemplified by non-limiting embodiments. It should however be realized that the embodiments are included in order to explain principles of the invention and not to limit the scope of the invention, defined by the appended claims. Details from two or more of the embodiments may be combined with each other.

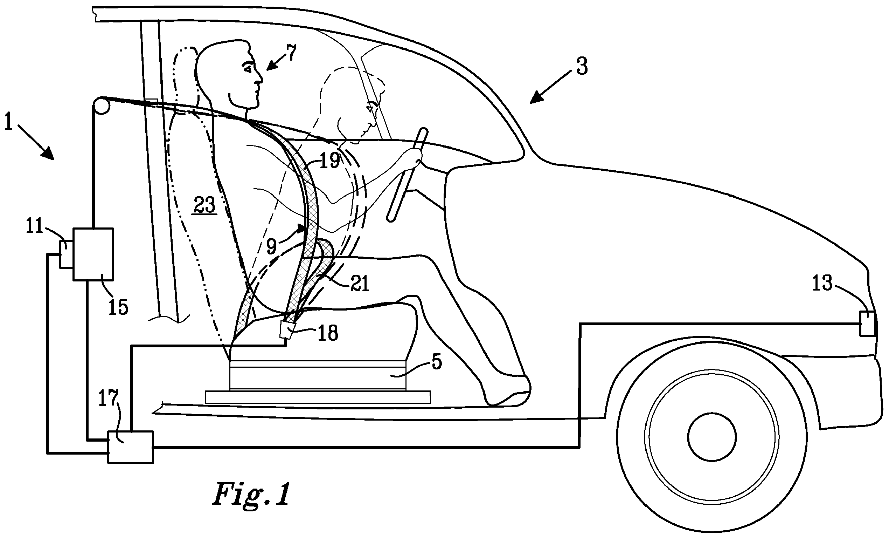

Figure 1 schematically illustrates a safety arrangement 1 of a vehicle 3. The vehicle 3 comprises a seat 5, in which a seat occupant 7 is seated. The seat occupant 7 has buckled up a seat belt 9, being a part of the safety arrangement 1. The safety arrangement 1 further comprises a first sensor 11 for determining, directly or indirectly, an excessive length $L_\Delta$ of seat belt pulled, a collision detection system 13, a retractor 15 for retracting the seat belt 9, and a processor 17. The safety arrangement 1 also comprises a seat belt usage sensor 18, which is used to detect if the seat belt 9 is buckled up. The retractor 15 is adapted to retract the seat belt 9 by applying a retraction force F, in case of a collision and/or a risk situation involving the vehicle 3 being detected by the collision detection system 13.

In the illustrated embodiment, the first sensor 11 is adapted to determine, directly or indirectly, a current length L of seat belt pulled, e.g. by measuring the rotation of a retractor spool being used for storing the seat belt 9. An excessive length $L_\Delta$ of seat belt pulled out is calculated as the difference between the current length L of seat belt pulled out and a minimum length $L_{min}$ of seat belt pulled out. The calculations may be made in the processor 17. Data about current length L are then sent from the first sensor 11 to the processor 17. The processor 17 is further adapted for determining the retraction force F as a function of the excessive length $L_\Delta$ of seat belt pulled out.

The collision detection system 13 may comprise a remote sensor system, e.g. a camera system, an IR camera system, a radar, a lidar, an ultrasonic sensor system, an accelerometer and/or a vehicle dynamics sensor, such as a steering wheel angle sensor. As an alternative, or in addition, the collision detection system 13 may comprise a contact sensor system, e.g. a piezoelectric sensor. The retraction of the seat belt 9 may be triggered directly by the remote sensor system detecting a risk situation, such as an imminent collision, The collision detection system 13 is connected to the processor 17. One or more sensors may be used by the collision detection system 13. They may be located at various positions in the vehicle 3 depending on type of sensor.

In case of a risk situation, such as an imminent collision, being detected by the collision detection system 13, the processor 17 sends a signal to the retractor 15 to retract the seat belt 9 by applying the retraction force F.

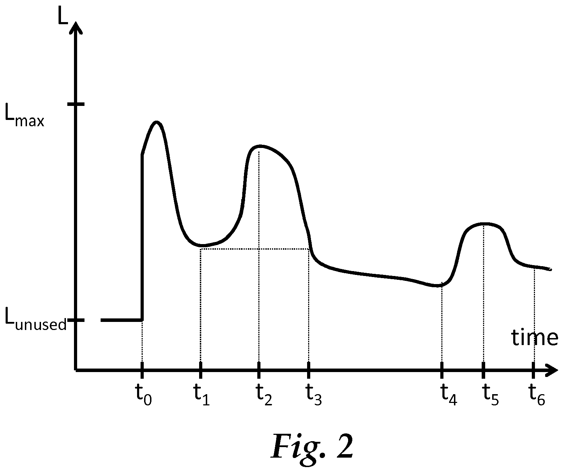

Figure 2 illustrates an example of a series of measurements made of current length L as a function of time. The current length L is repeatedly measured such that the series in practice can be plotted as a continuous curve.

When the seat belt 9 is not used, it hangs against the wall of the vehicle 3. It has then an unused length $L_{unused}$. At the time $t_0$ the seat occupant 7 buckles up, a signal is sent from the seat belt usage sensor 18 to the processor 17 The seat occupant 7 is then seated in the seat 5 and has pulled out the seat belt 9. According to a standard configuration of the seat belt 9, there is a first belt portion 19 running across the torso of the seat occupant 7 and a second belt portion 21 running over the hip of the seat occupant 7. If the seat occupant 7 leans forwards, it is primarily the length of the first belt portion 19, which is increased.

The minimum length $L_{min}$ is determined as the hitherto lowest value of the current length L, since the last time the seat belt 9 was buckled up. The value of the minimum length $L_{min}$ thus sinks gradually until the time $t_1$, when the seat occupant 7 leans back against a backrest 23 of the seat 5. Thereafter, the seat occupant 7 leans forward, interval $t_1$ to $t_2$, and the values of the current length L increases. Hence the minimum length $L_{min}$ remains unchanged. However, the excessive length $L_\Delta$ of seat belt pulled out increases when the seat occupant 7 leans forward.

The current length L is continuously monitored as long as the seat belt 9 is buckled up. As soon as the current length L is less than the minimum length $L_{min}$, a new value for the minimum length $L_{min}$ is provided, in Figure 2 after the time $t_3$. Between time $t_3$ and $t_4$ the seat occupant 7 sits rather still leaning against the backrest 23. However, as the seat belt 9 moves a little over the body of the seat occupant 7, and as air is pressed out of the clothes, the current length L slowly decreases and new values of the minimum length $L_{min}$ are provided up until the time $t_4$. Then the seat occupant 7 once against leans forward and the current length L increases. The minimum length $L_{min}$ is thus maintained as it is. After a while, see time te, the seat occupant 7 once again leans backwards against the backrest 23. However, the current length L is longer than the hitherto determined minimum length $L_{min}$. The minimum length $L_{min}$ is thus not changed.

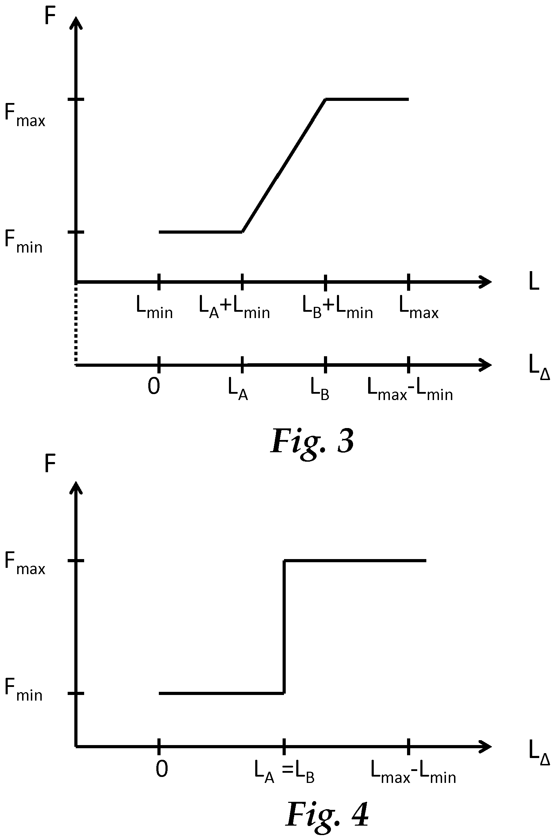

Figure 3 illustrates the retraction force as a function of the current length L, see upper x-axis, and the excessive length $L_\Delta$ of seat belt pulled out, see lower x-axis. As mentioned above $L_\Delta = L - L_{min}$.

The retraction force F is, at least partly, increasing as a function of the excessive length $L_\Delta$ of seat belt pulled out. This means that a higher force will be used if the seat occupant is far from the backrest, as compared to if the seat occupant is close to the backrest.

In the illustrated embodiment, if the excessive length $L_\Delta$ of seat belt pulled out is smaller than or equal to a first limit value $L_A$, a minimal retraction force $F_{min}$ is used to retract the seat belt 9, in case of a risk situation involving the vehicle 3 being detected. If the excessive length $L_\Delta$ of seat belt pulled out is greater than a second limit value $L_B$, a maximal retraction force $F_{max}$ is used to retract the seat belt 9, in case of a risk situation involving the vehicle 3 being detected. The second limit value $L_B$ is larger than the first limit value $L_A$. Between the first limit value $L_A$ and the second limit value $L_B$, the function is, at least partly, increasing, e.g. linearly increasing as shown in Figure 3.

Further, the second limit value may be set as the same as the first limit value, $L_B = L_A$, as in a second embodiment illustrated in Figure 4. In that case, the retraction force F will comprise a step function: below and at the limit value $L_A = L_B$, the minimal retraction force $F_{min}$ will be applied and above the limit value, the maximal retraction force $F_{max}$ will be applied.

Further modifications of the invention within the scope of the appended claims are feasible. As such, the present invention should not be considered as limited by the embodiments and figures described herein. Rather, the full scope of the invention should be determined by the appended claims, with reference to the description and drawings.

**Claims**

1. A method for retracting a seat belt (9) of a vehicle (3), said method comprising the steps of

   - determining an excessive length ($L_\Delta$) of seat belt pulled out, said excessive length ($L_\Delta$) of seat belt pulled out being the difference between a current length (L) and a minimum length ($L_{min}$) of seat belt pulled out, when said seat belt (9) is in use by the current seat occupant, said minimum length ($L_{min}$) being determined as the hitherto lowest value of said current length (L), since the last time said seat belt (9) was buckled up,
   - in case of detecting a risk situation involving said vehicle (3), retracting said seat belt (9) by applying a retraction force (F), said retraction force (F) being a function of said excessive length ($L_\Delta$) of seat belt pulled out, said retraction force (F) being, at least partly, increasing as a function of said excessive length ($L_\Delta$) of seat belt pulled out.
   said retraction force (F) being differentiated from a pre-tension force used to keep said seat belt tensioned, when the seat occupant moves in the seat during normal driving conditions, said retraction force (F) being at least twice the pretension force.

2. The method according to claim 1 wherein said current length (L) of seat belt pulled out and/or said minimum length ($L_{min}$) of seat belt pulled out is/are determined continuously or repeatedly.

3. The method according to claims 1 or 2, wherein said current length (L) of seat belt pulled out is determined a plurality of times, and said minimum length ($L_{min}$) of seat belt pulled out is determined as a minimum value of said determined plurality of current lengths (L) of seat belt pulled out.

4. The method according to any one of the preceding claims, wherein at least said excessive length ($L_\Delta$) of seat belt pulled out is retracted.

5. The method according to any one of the preceding claims, wherein a minimal retraction force ($F_{min}$) is utilized, if said excessive length ($L_\Delta$) of seat belt pulled out is smaller than a first limit value ($L_A$).

6. The method according to any one of the preceding claims, wherein a maximal retraction force ($F_{max}$) is utilized, if said excessive length ($L_\Delta$) of seat belt pulled out is greater than a second limit value ($L_B$).

7. The method according to any one of the preceding claims further comprising

- determining if a seat occupant (7) is present in a seat (5), to which said seat belt (9) is associated,

said seat belt being retracted, if said seat occupant (7) is present in said seat (5).

8. A safety arrangement (1) of a vehicle (3) comprising

- a seat belt (9),
- a first sensor (11), for directly or indirectly determining an excessive length ($L_\Delta$) of seat belt pulled out,
- a collision detection system (13),
- a retractor (15), for retracting said seat belt (9) by applying a retraction force (F), in case of a risk situation involving said vehicle (3) being detected by said collision detection system (13), and
- a processor (17), which is adapted for determining said retraction force (F) as a function of said excessive length ($L_\Delta$) of seat belt pulled out,
- a seat belt usage sensor (18),

wherein said excessive length ($L_\Delta$) of seat belt pulled out is the difference between a current length (L) and a minimum length ($L_{min}$) of seat belt pulled out, when said seat belt (9) is in use by the current seat occupant,

said minimum length ($L_{min}$) being determined as the hitherto lowest value of said current length (L), since the last time said seat belt (9) was buckled up, said retraction force (F) being, at least partly, increasing as a function of said excessive length ($L_\Delta$) of seat belt pulled out and wherein said retraction force (F) is differentiated from a pre-tension force used to keep said seat belt tensioned, when the seat occupant moves in the seat during normal driving conditions, said retraction force (F) being at least twice the pre-tension force.

9. The safety arrangement (1) according to claim 8, wherein said first sensor (11) is adapted for determining a current length (L) of seat belt pulled out, and said excessive length ($L_\Delta$) of seat belt pulled out is calculated as the difference between said current length (L) of seat belt pulled out and a minimum length ($L_{min}$) of seat belt pulled out, when said seat belt (9) is in use by the current seat occupant.

10. A vehicle (3) comprising a safety arrangement (1) according to any one of claims 8-9.

11. A use of a safety arrangement (1) according to any one of claims 8-9 for retracting said seat belt (9), in case of a risk situation being detected, by applying said retraction force (F) being a function of said excessive length ($L_\Delta$) of seat belt pulled out.

**Patentansprüche**

1. Verfahren zum Einziehen eines Sitzgurts (9) eines Fahrzeugs (3), das Verfahren umfassend die Schritte

- Bestimmen einer übermäßigen Länge ($L_\Delta$) eines herausgezogenen Sitzgurts, wobei die übermäßige Länge ($L_\Delta$) eines herausgezogenen Sitzgurts die Differenz zwischen einer aktuellen Länge (L) und einer minimalen Länge ($L_{min}$) eines herausgezogenen Sitzgurts ist, wenn der Sitzgurt (9) im Gebrauch durch den aktuellen Sitzinsassen ist, wobei die minimale Länge ($L_{min}$) als der bisher niedrigste Wert der aktuellen Länge (L) seit dem letzten Mal, dass der Sitzgurt (9) angeschnallt wurde, bestimmt wird,
- im Falle des Erkennens einer Gefahrensituation, in die das Fahrzeug (3) einbezogen ist, Einziehen des Sitzgurts (9) durch Anlegen einer Einzugskraft (F), wobei die Einzugskraft (F) von der übermäßigen Länge ($L_\Delta$) eines herausgezogenen Sitzgurts abhängig ist, wobei die Einzugskraft (F), zumindest teilweise, abhängig von der übermäßigen Länge ($L_\Delta$) eines herausgezogenen Sitzgurts zunimmt, wobei die Einzugskraft (F) von einer Gurtstraffkraft verschieden ist, die verwendet wird, um den Sitzgurt straff zu halten, wenn sich der Sitzinsasse während normalen Fahrbedingungen in dem Sitz bewegt, wobei die Einzugskraft (F) zumindest doppelt so hoch wie die Gurtstraffkraft ist.

2. Verfahren nach Anspruch 1, wobei die aktuelle Länge (L) eines herausgezogenen Sitzgurts und/oder die minimale Länge ($L_{min}$) eines herausgezogenen Sitzgurts fortlaufend oder wiederholt bestimmt wird/werden.

3. Verfahren nach den Ansprüchen 1 oder 2, wobei die aktuelle Länge (L) eines herausgezogenen Sitzgurts eine Vielzahl von Malen bestimmt wird und die minimale Länge ($L_{min}$) eines herausgezogenen Sitzgurts als ein Mindestwert der bestimmten Vielzahl von aktuellen Längen (L) eines herausgezogenen Sitzgurts bestimmt wird.

4. Verfahren nach einem der vorhergehenden Ansprüche, wobei zumindest die übermäßige Länge ($L_\Delta$) eines herausgezogenen Sitzgurts eingezogen wird.

5. Verfahren nach einem der vorhergehenden Ansprüche, wobei eine minimale Einzugskraft ($F_{min}$) genutzt wird, wenn die übermäßige Länge ($L_\Delta$) eines herausgezogenen Sitzgurts kleiner als ein erster Grenzwert ($L_A$) ist.

**6.** Verfahren nach einem der vorhergehenden Ansprüche, wobei eine maximale Einzugskraft ($F_{max}$) genutzt wird, wenn die übermäßige Länge ($L_\Delta$) eines herausgezogenen Sitzgurts größer als ein zweiter Grenzwert ($L_B$) ist.

**7.** Verfahren nach einem der vorhergehenden Ansprüche, ferner umfassend

- Bestimmen, ob ein Sitzinsasse (7) in einem Sitz (5), zu dem der Sitzgurt (9) gehört, vorhanden ist,
wobei der Sitzgurt eingezogen wird, wenn der Sitzinsasse (7) in dem Sitz (5) vorhanden ist.

**8.** Sicherheitsanordnung (1) eines Fahrzeugs (3), umfassend

- einen Sitzgurt (9),
- einen ersten Sensor (11) zum direkten oder indirekten Bestimmen einer übermäßigen Länge ($L_\Delta$) eines herausgezogenen Sitzgurts,
- ein Kollisionserkennungssystem (13),
- ein Einzugselement (15) zum Einziehen des Sitzgurts (9) durch Anlegen einer Einzugskraft (F), im Falle, dass eine Gefahrensituation, in die das Fahrzeug (3) einbezogen ist, durch das Kollisionserkennungssystem (13) erkannt wird, und
- einen Prozessor (17), der zum Bestimmen der Einzugskraft (F) abhängig von der übermäßigen Länge ($L_\Delta$) eines herausgezogenen Sitzgurts konzipiert ist,
- einen Sitzgurtverwendungssensor (18),
wobei die übermäßige Länge ($L_\Delta$) eines herausgezogenen Sitzgurts die Differenz zwischen einer aktuellen Länge (L) und einer minimalen Länge ($L_{min}$) eines herausgezogenen Sitzgurts ist, wenn der Sitzgurt (9) im Gebrauch durch den aktuellen Sitzinsassen ist,
wobei die minimale Länge ($L_{min}$) als der bisher niedrigste Wert der aktuellen Länge (L) seit dem letzten Mal, dass der Sitzgurt (9) angeschnallt wurde, bestimmt wird,
wobei die Einzugskraft (F), zumindest teilweise, abhängig von der übermäßigen Länge ($L_\Delta$) eines herausgezogenen Sitzgurts zunimmt und wobei die Einzugskraft (F) von einer Gurtstraffkraft verschieden ist, die verwendet wird, um den Sitzgurt straff zu halten, wenn sich der Sitzinsasse während normalen Fahrbedingungen in dem Sitz bewegt, wobei die Einzugskraft (F) zumindest doppelt so hoch wie die Gurtstraffkraft ist.

**9.** Sicherheitsanordnung (1) nach Anspruch 8, wobei der erste Sensor (11) zum Bestimmen einer aktuellen Länge (L) eines herausgezogenen Sitzgurts konzipiert ist und die übermäßige Länge ($L_\Delta$) eines herausgezogenen Sitzgurts als die Differenz zwischen der aktuellen Länge (L) eines herausgezogenen Sitzgurts und einer minimalen Länge ($L_{min}$) eines herausgezogenen Sitzgurts berechnet wird, wenn der Sitzgurt (9) im Gebrauch durch den aktuellen Sitzinsassen ist.

**10.** Fahrzeug (3), umfassend eine Sicherheitsanordnung (1) nach einem der Ansprüche 8-9.

**11.** Verwendung einer Sicherheitsanordnung (1) nach einem der Ansprüche 8-9 zum Einziehen des Sitzgurts (9), im Falle, dass eine Gefahrensituation erkannt wird, durch Anlegen der Einzugskraft (F), die abhängig von der übermäßigen Länge ($L_\Delta$) des herausgezogenen Sitzgurts ist.

**Revendications**

**1.** Procédé de rappel d'une ceinture de sécurité (9) d'un véhicule (3), ledit procédé comprenant les étapes consistant à
déterminer une longueur excessive ($L_\Delta$) de la ceinture de sécurité tirée, ladite longueur excessive ($L_\Delta$) de la ceinture de sécurité tirée étant la différence entre une longueur actuelle (L) et une longueur minimale ($L_{min}$) de la ceinture de sécurité tirée, lorsque ladite ceinture de sécurité (9) est utilisée par l'occupant actuel du siège, ladite longueur minimale ($L_{min}$) étant déterminée comme la valeur jusqu'alors la plus faible de ladite longueur actuelle (L) depuis la dernière fois que ladite ceinture de sécurité (9) a été attachée,
en cas de détection d'une situation à risque impliquant ledit véhicule (3), rappeler ladite ceinture de sécurité (9) en appliquant une force de rappel (F), ladite force de rappel (F) étant fonction de ladite longueur excessive ($L_\Delta$) de la ceinture de sécurité tirée, ladite force de rappel (F) étant, au moins partiellement, croissante en fonction de ladite longueur excessive ($L_\Delta$) de la ceinture de sécurité tirée, ladite force de rappel (F) étant différenciée d'une force de précontrainte utilisée pour maintenir ladite ceinture de sécurité tendue, lorsque l'occupant du siège bouge sur le siège dans des conditions normales de conduite, ladite force de rappel (F) étant au moins le double de la force de précontrainte.

**2.** Procédé selon la revendication 1, la longueur actuelle (L) de la ceinture de sécurité tirée et/ou la longueur minimale ($L_{min}$) de la ceinture de sécurité tirée étant déterminée(s) de manière continue ou répétée.

**3.** Procédé selon la revendication 1 ou 2, ladite longueur actuelle (L) de la ceinture de sécurité tirée étant déterminée une pluralité de fois, et ladite longueur minimale ($L_{min}$) de la ceinture de sécurité tirée étant déterminée comme une valeur minimale de ladite pluralité déterminée de longueurs actuelles (L) de la ceinture de sécurité tirée.

4. Procédé selon l'une quelconque des revendications précédentes, au moins ladite longueur excessive ($L_\Delta$) de la ceinture de sécurité tirée étant rappelée.

5. Procédé selon l'une quelconque des revendications précédentes, une force de rappel minimale ($F_{min}$) étant utilisée, si ladite longueur excessive ($L_\Delta$) de la ceinture de sécurité tirée est inférieure à une première valeur limite ($L_A$).

6. Procédé selon l'une quelconque des revendications précédentes, une force de rappel maximale ($F_{max}$) étant utilisée, si ladite longueur excessive ($L_\Delta$) de la ceinture de sécurité tirée est supérieure à une seconde valeur limite ($L_B$).

7. Procédé selon l'une quelconque des revendications précédentes, comprenant en outre l'étape consistant à
déterminer si un occupant de siège (7) est présent sur un siège (5) auquel ladite ceinture de sécurité (9) est associée,
ladite ceinture de sécurité étant rappelée, si ledit occupant du siège (7) est présent sur ledit siège (5).

8. Agencement de sécurité (1) d'un véhicule (3) comprenant
une ceinture de sécurité (9),
un premier capteur (11), pour déterminer directement ou indirectement une longueur excessive ($L_\Delta$) de la ceinture de sécurité tirée,
un système de détection de collision (13),
un enrouleur (15), pour rappeler ladite ceinture de sécurité (9) en appliquant une force de rappel (F), si une situation à risque impliquant ledit véhicule (3) est détectée par ledit système de détection de collision (13), et
un processeur (17), qui est conçu pour déterminer ladite force de rappel (F) en fonction de ladite longueur excessive ($L_\Delta$) de la ceinture de sécurité tirée,
un capteur d'utilisation de ceinture de sécurité (18),
ladite longueur excessive ($L_\Delta$) de la ceinture de sécurité tirée étant la différence entre une longueur actuelle (L) et une longueur minimale ($L_{min}$) de la ceinture de sécurité tirée, lorsque ladite ceinture de sécurité (9) est utilisée par l'occupant actuel du siège,
ladite longueur minimale ($L_{min}$) étant déterminée comme la valeur jusqu'alors la plus faible de ladite longueur actuelle (L), depuis la dernière fois que ladite ceinture de sécurité (9) a été attachée, ladite force de rappel (F) étant, au moins partiellement, croissante en fonction de ladite longueur excessive ($L_\Delta$) de la ceinture de sécurité tirée et ladite force de rappel (F) étant différenciée d'une force de précontrainte utilisée pour maintenir ladite ceinture sous tension, lorsque l'occupant du siège bouge sur le siège dans des conditions normales de conduite, ladite force de rappel (F) étant au moins deux fois la force de précontrainte.

9. Agencement de sécurité (1) selon la revendication 8, ledit premier capteur (11) étant conçu pour déterminer une longueur actuelle (L) de la ceinture de sécurité tirée, et ladite longueur excessive ($L_\Delta$) de la ceinture de sécurité tirée étant calculée comme la différence entre ladite longueur actuelle (L) de la ceinture de sécurité tirée et une longueur minimale ($L_{min}$) de la ceinture de sécurité tirée, lorsque ladite ceinture de sécurité (9) est utilisée par l'occupant du siège actuel.

10. Véhicule (3) comprenant un agencement de sécurité (1) selon la revendication 8 ou 9.

11. Utilisation d'un agencement de sécurité (1) selon la revendication 8 ou 9 pour rappeler ladite ceinture de sécurité (9), si une situation à risque est détectée, en appliquant ladite force de rappel (F) en fonction de ladite longueur excessive ($L_\Delta$) de ceinture de sécurité sortie.

Fig.1

*Fig. 2*

*Fig. 3*

*Fig. 4*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070114766 A1
- US 20070114768 A1
- DE 10346625 A1
- DE 102006021380 A1